(19) Europäisches Patentamt
European Patent Office
Office européen des brevets

(11) **EP 4 644 257 A1**

(12) **DEMANDE DE BREVET EUROPEEN**

(43) Date de publication:
**05.11.2025 Bulletin 2025/45**

(21) Numéro de dépôt: **25169617.5**

(22) Date de dépôt: **10.04.2025**

(51) Classification Internationale des Brevets (IPC):
***B64D 37/00*** (2006.01)    ***B64D 37/32*** (2006.01)
***F02C 7/22*** (2006.01)    ***B64D 45/00*** (2006.01)

(52) Classification Coopérative des Brevets (CPC):
**B64D 37/005; B64D 37/32;** B64D 2045/0085

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **30.04.2024 FR 2404525**

(71) Demandeur: **AIRBUS OPERATIONS (S.A.S.)**
**31060 Toulouse (FR)**

(72) Inventeur: **DESSERTENNE, Franck**
**TOULOUSE (FR)**

(74) Mandataire: **Airbus-OPS SAS**
**P.O. Box M0101/1**
**316, route de Bayonne**
**31060 Toulouse Cedex 9 (FR)**

(54) **PROCÉDÉ ET DISPOSITIF DE DÉTECTION D'UNE SITUATION DE DÉCONNEXION D'UN CONDUIT FAISANT PARTIE D'UN SYSTÈME DE POMPAGE D'UN COLLECTEUR DE CARBURANT D'UN AÉRONEF**

(57)     - Procédé et dispositif de détection d'une situation de déconnexion d'un conduit faisant partie d'un système de pompage d'un collecteur de carburant d'un aéronef.
- Le procédé (P) comporte une étape de réception (E1) pour recevoir d'une valeur de la quantité de carburant dans le collecteur, une étape de traitement (E2) comprenant une sous-étape (E2A) pour classifier la valeur reçue à l'étape de réception (E1) en une valeur dite normale ou en une valeur dite anormale, une sous-étape (E2B) pour calculer la valeur d'un indicateur de santé, à partir de ladite valeur reçue, ainsi que d'un nombre prédéterminé de valeurs reçues précédemment, et une sous-étape (E2C) pour comparer la valeur de l'indicateur de santé ainsi calculée à un seuil de manière à pouvoir détecter une situation de déconnexion, ainsi qu'une étape d'alerte (E3) pour émettre une alerte en cas de détection d'une situation de déconnexion, ledit procédé (P) permettant ainsi, en tenant compte de la quantité de carburant présente dans le collecteur, de détecter de façon fiable une situation de déconnexion et d'alerter des opérateurs, notamment des opérateurs de maintenance.

Fig. 4

## Description

La présente invention concerne un procédé et un dispositif de détection d'une situation de déconnexion d'un conduit faisant partie d'un système de pompage d'un collecteur de carburant d'un aéronef.

On sait qu'un aéronef, en particulier un avion de transport, comprend un système d'alimentation pour alimenter en carburant les moteurs de l'aéronef.

Ce système d'alimentation en carburant comporte, généralement, des collecteurs qui reçoivent le carburant de réservoirs de carburant, notamment de réservoirs installés dans les ailes d'un avion de transport, et des pompes pour transmettre le carburant des collecteurs aux moteurs.

Chaque collecteur (« collector cell » en anglais) est également pourvu d'une pompe à injection pour maintenir le niveau de remplissage en carburant dans le collecteur. A cet effet, un conduit d'évacuation est relié à la sortie de la pompe à injection.

Il peut arriver, en raison notamment d'une usure ou d'un problème au niveau du joint entre le conduit d'évacuation et la pompe à injection, que le conduit d'évacuation soit séparé mécaniquement de la pompe à injection et qu'il puisse ainsi bouger. Bien qu'une telle déconnexion n'empêche pas le système d'alimentation de fonctionner car le collecteur contient toujours du carburant en raison de son positionnement notamment et l'aéronef dispose de plusieurs collecteurs, elle peut générer, principalement par des mouvements du conduit durant le vol, des dommages sur le collecteur.

Par conséquent, sans avoir d'impact immédiat, une telle déconnexion peut avoir pour conséquence de produire une usure à moyen ou à long terme du collecteur, qui peut générer des coûts importants de réparation et nécessiter une immobilisation de l'aéronef au sol.

Il existe donc un besoin de pouvoir disposer d'une solution fiable permettant d'alerter des opérateurs, notamment des opérateurs de maintenance, d'une telle situation de déconnexion.

La présente invention a pour objet de proposer une solution pour répondre au besoin précité. Elle concerne un procédé de détection d'une situation de déconnexion d'un conduit faisant partie d'un système de pompage d'un collecteur de carburant d'un aéronef, tel que revendiqué à la revendication 1.

Ainsi, grâce à l'invention, en tenant compte de la quantité de carburant disponible dans le collecteur, on est en mesure de détecter, de façon fiable, une situation de déconnexion d'un conduit d'un système de pompage d'un collecteur de carburant d'un aéronef et d'émettre une alerte correspondante. Ceci permet au personnel de maintenance ou à d'autres personnes s'occupant de l'aéronef d'être alertés et informés dès l'apparition et la détection d'une telle déconnexion et ainsi de pouvoir prendre les mesures appropriées.

La présente invention concerne également un dispositif de détection d'une situation de déconnexion d'un conduit faisant partie d'un système de pompage d'un collecteur de carburant d'un aéronef, tel que revendiqué à la revendication 9.

Les figures annexées feront bien comprendre comment l'invention peut être réalisée. Sur ces figures, des références identiques désignent des éléments semblables.

La figure 1 est un schéma synoptique d'un dispositif de détection d'une situation de déconnexion d'un conduit faisant partie d'un système de pompage d'un collecteur de carburant d'un aéronef.

La figure 2 est une vue partielle, en perspective, d'une aile d'un aéronef, montrant la position d'un collecteur de carburant.

La figure 3 est une vue partielle, en perspective, d'un système de pompage d'un collecteur de carburant.

La figure 4 illustre schématiquement un procédé de détection d'une situation de déconnexion.

La figure 5 est un graphique illustrant des valeurs mesurées et reçues de la quantité de carburant présente dans le collecteur de carburant, qui sont utilisées pour calculer les valeurs d'un indicateur de santé.

La figure 6 est un graphique illustrant des valeurs successives calculées d'un indicateur de santé.

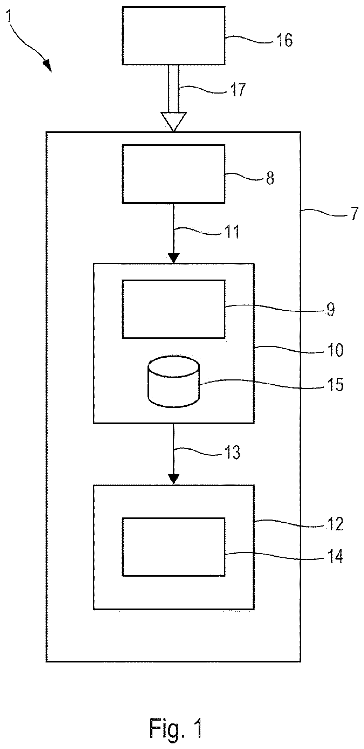

Le dispositif 1 permettant d'illustrer l'invention et représenté, de façon schématique, dans un mode de réalisation particulier sur la figure 1, est destiné à détecter une situation de déconnexion sur un aéronef, en particulier sur un avion de transport.

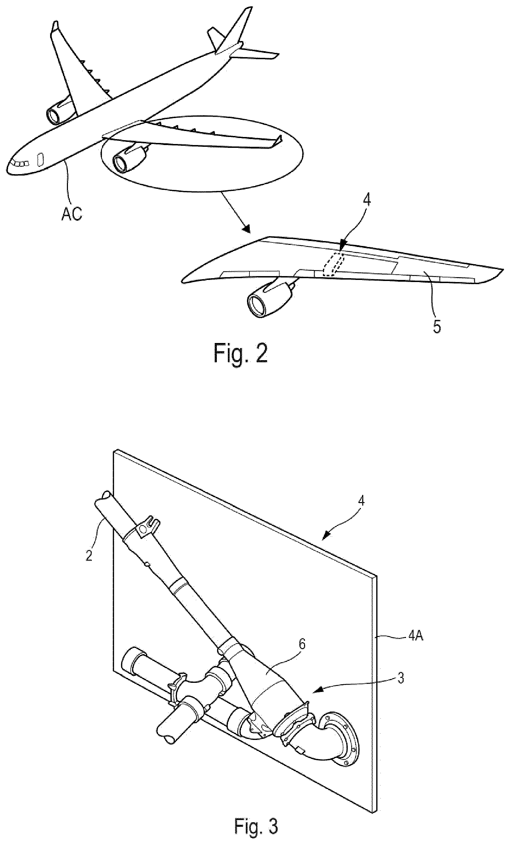

Plus précisément, le dispositif 1 est destiné à détecter une déconnexion d'un conduit 2 (ou tuyau) d'un système de pompage 3 (figure 3) faisant partie d'un système d'alimentation en carburant de l'aéronef. Le système d'alimentation (en carburant) qui est destiné à alimenter en carburant les moteurs de l'aéronef, comporte, de façon usuelle, des collecteurs 4 qui reçoivent le carburant de réservoirs de carburant, avant qu'il ne soit transmis aux moteurs de l'aéronef par le système de pompage 3.

Comme représenté schématiquement sur la figure 2, dans un mode de réalisation particulier, un collecteur 4 auquel peut être appliqué le dispositif 1 est agencé dans une aile 5 de l'aéronef AC. Le système de pompage 3 comporte, notamment, une pompe à injection 6 qui est associée au collecteur 4 dont on a représenté schématiquement une paroi 4A sur la figure 3, et qui est destinée à maintenir un niveau de remplissage en carburant dans le collecteur. Le conduit 2 est fixé à la sortie de la pompe à injection 6.

Le dispositif 1 a pour objet de détecter une situation de déconnexion correspondant à une déconnexion d'un tel conduit 2 de la pompe à injection 6. Sans avoir d'impact immédiat, une telle déconnexion pourrait produire une usure à moyen ou à long terme du collecteur 4, usure qui pourrait générer de coûts importants de réparation et nécessiter une immobilisation de l'aéronef au sol.

Aussi, pour détecter une situation de déconnexion telle que décrite ci-dessus, le dispositif 1 comporte, comme représenté sur la figure 1, un ensemble 7 d'unités, comprenant une moins :

- un récepteur 8 configuré pour recevoir une valeur de la quantité de carburant réellement présente dans le collecteur 4 ;
- une unité de traitement 9 d'un calculateur 10, qui est configurée pour :

    • classifier la valeur reçue du récepteur 8 (par l'intermédiaire d'une liaison 11), principalement en une valeur dite normale ou en une valeur dite anormale ;
    • calculer la valeur d'un indicateur de santé HI (pour « Health Indicator » en anglais), à partir de ladite valeur reçue (et classifiée), qu'elle soit normale ou anormale, ainsi que d'un nombre prédéterminé de valeurs reçues précédemment et formant une fenêtre glissante comme précisé ci-dessous ; et
    • comparer la valeur de l'indicateur de santé HI ainsi calculée à un seuil de manière à pouvoir détecter une situation de déconnexion ; et

- un émetteur 12 configuré pour émettre une alerte au moins lorsqu'elle est informée par l'unité de traitement 9 (via une liaison 13) de la détection d'une situation de déconnexion.

L'émetteur 12, par exemple un dispositif d'affichage, comporte, de préférence, un écran 14 configuré pour afficher le cas échéant un message visuel représentant une alerte. L'émetteur 12 peut également afficher sur l'écran 14 la valeur de l'indicateur de santé HI, calculée par l'unité de traitement 9.

En variante ou en complément, l'émetteur 12 peut également émettre une alerte sonore.

Le calculateur 10 comporte, de plus, une base de données 15 pour enregistrer les valeurs de quantité de carburant (dans le collecteur 4), reçues successivement via le récepteur 8.

Le dispositif 1 comporte, en outre, un système de mesure 16 qui est destiné à mesurer, de façon usuelle, la valeur de la quantité de carburant présente dans le collecteur 4, et ceci à des instants successifs. Au moins certaines de ces valeurs mesurées sont reçues via le récepteur 8.

Le système de mesure 16 est un système usuel embarqué sur l'aéronef, qui mesure la quantité de carburant présente dans le collecteur 4, par exemple à l'aide de sondes de mesure usuelles de type capacitance ou de tout autre type de capteur, et ceci notamment lors d'un vol de l'aéronef. Ces mesures sont enregistrées dans le système de mesure 16 ou dans une mémoire appropriée d'un système ou d'un calculateur de l'aéronef.

Le dispositif 1 (à savoir l'ensemble 7) peut être un dispositif embarqué sur l'aéronef ou, de préférence, un dispositif installé au sol, par exemple au niveau d'un aéroport.

Dans un mode de réalisation préféré, le dispositif 1 est installé au niveau d'un aéroport desservi régulièrement par l'aéronef et il est utilisé, par exemple, par un personnel de maintenance de l'aéronef. Dans ce cas, dans un mode de mise en œuvre préféré, le récepteur 8 est installé et configuré pour interroger le système de mesure 16 (ou un autre système de l'aéronef disposant des mesures réalisées par le système de mesure 16) à chaque arrivée de l'aéronef à une porte de l'aéroport, afin qu'il lui transmette, via une liaison 17 de transmission de données sans fil, la dernière valeur mesurée de la quantité de carburant présente dans le collecteur 4. Cette valeur reçue par l'intermédiaire du récepteur 8 est ensuite utilisée par le dispositif 1, comme précisé ci-dessus.

Dans une variante de réalisation, le dispositif 1 est installé sur l'aéronef, et le récepteur 8 est configuré pour recevoir les valeurs mesurées par le système de mesure 16, via une liaison 17 usuelle, par exemple de type filaire, et ceci soit directement du système de mesure 16, soit d'un autre système de l'aéronef disposant des mesures réalisées par le système de mesure 16.

Le dispositif 1, tel que décrit ci-dessus, est apte à mettre en œuvre un procédé P de détection d'une situation de déconnexion.

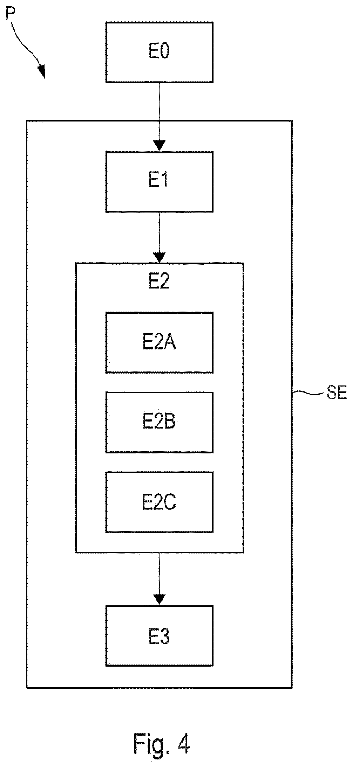

Le procédé P comporte, comme représenté sur la figure 4, une suite SE d'étapes successives, qui est mise en œuvre de façon itérative. Cette suite SE d'étapes successives comprend :

- une étape de réception E1, mise en œuvre par le récepteur 8, pour recevoir une valeur indiquant la quantité de carburant présente dans le collecteur 4 ;
- une étape de traitement E2, mise en œuvre par l'unité de traitement 9 du calculateur 10. Cette étape de traitement E2 comprend :

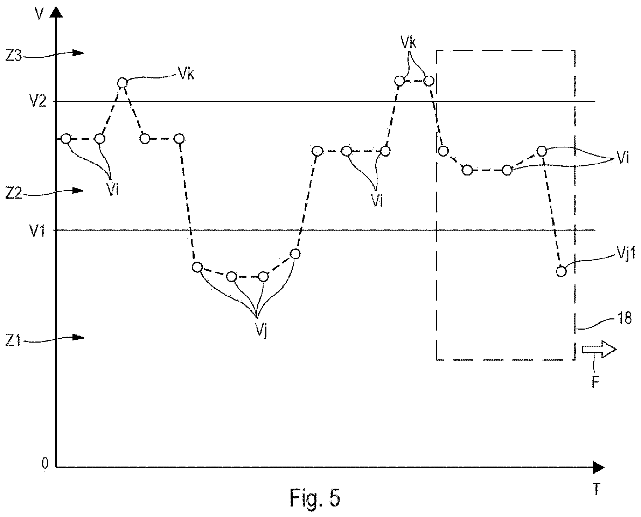

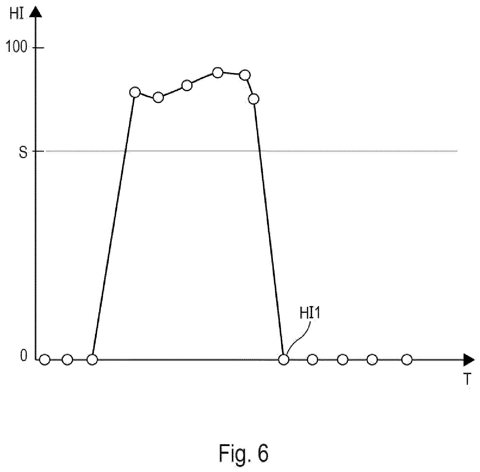

    • une sous-étape de classification E2A pour classifier la valeur reçue à l'étape de réception E1, le cas échéant en une valeur dite normale ou en une valeur dite anormale ;
    • une sous-étape de calcul E2B pour calculer la valeur d'un indicateur de santé HI, à partir de ladite valeur reçue, qu'elle soit normale ou anormale, ainsi que d'un nombre prédéterminé de valeurs reçues aux itérations précédentes qui forment une fenêtre glissante 18 (figure 5) ; et
    • une sous-étape de comparaison E2C pour comparer la valeur de l'indicateur de santé HI (calculée la sous-étape de calcul E2B) à un seuil S (figure 6) de manière à pouvoir détecter une situation de déconnexion ; et

- une étape d'alerte E3, mise en œuvre par l'émetteur 12, pour émettre une alerte au moins en cas de détection d'une situation (anormale) de déconnexion.

On décrit, à présent, plus en détail, les étapes E1, E2 et E3 précitées.

Dans un mode de réalisation particulier, l'étape de réception E1 est mise en œuvre après chaque vol de l'aéronef, notamment lorsque le dispositif 1 est embarqué sur l'aéronef, comme indiqué ci-dessus.

En outre, dans un mode de réalisation préféré, l'étape de réception E1 est mise en œuvre à chaque fois que l'aéronef revient à l'aéroport où est installé le dispositif 1. Dans ce cas, le récepteur 8 interroge le système de l'aéronef qui contient les valeurs mesurées, pour réceptionner une ou des valeurs mesurées, par exemple celle mesurée à la fin de chaque vol. Cette étape de réception E1 est mise en œuvre, de préférence, à chaque arrivée de l'aéronef à une porte de l'aéroport.

Dans le cadre de la présente invention, la valeur V de la quantité de carburant présente dans le collecteur 4 peut être une valeur de masse (exprimée par exemple en kg) ou une valeur de volume (exprimée par exemple en m³). Le système de mesure 16 mesure, généralement, une valeur de volume qui peut alors :

- être utilisée telle quelle, comme valeur de volume ; ou
- être transformée, de façon usuelle, en une valeur de masse.

Aussi, le procédé P également comporte également une étape préliminaire E0 à laquelle le système de mesure 16 mesure la valeur V de la quantité de carburant dans le collecteur 4. Les valeurs mesurées sont enregistrées dans le système de mesure 16 ou dans une mémoire appropriée d'un système ou d'un calculateur de l'aéronef, d'où elles sont réceptionnées par le récepteur 8.

La figure 5 illustre un ensemble de valeurs V successives mesurées (reçues via le récepteur 8) de la quantité de carburant, en fonction du temps T.

Cette figure 5 montre trois zones de valeurs V :

- une zone Z1 comprenant les valeurs Vj qui sont inférieures ou égales à une valeur seuil V1 prédéterminée ;
- une zone Z2 comprenant les valeurs Vi qui sont supérieures à la valeur seuil V1 et inférieures ou égales à une valeur seuil V2, la valeur seuil V2 étant supérieure à la valeur seuil V1 ; et
- une zone Z3 comprenant les valeurs Vk qui sont supérieures à la valeur seuil V2.

A simple titre d'illustration, non limitative, pour un collecteur 4 présentant une quantité maximale de carburant de 1600 kg :

- la valeur seuil V1 peut correspondre, par exemple, à 900 kg ; et
- la valeur seuil V2 peut correspondre, par exemple, à 1400 kg.

La sous-étape de classification E2A a pour objet de comparer chaque valeur reçue aux valeurs seuil V1 et V2 de manière à pouvoir la positionner dans l'une des zones Z1, Z2 et Z3.

Plus précisément, à la sous-étape de classification E2A, une valeur reçue :

- est considérée comme une valeur anormale, si elle est positionnée dans la zone Z1, c'est-à-dire si elle est inférieure ou égale à la valeur seuil V1 ;
- est considérée comme une valeur normale, si elle est positionnée dans la zone Z2, c'est-à-dire si elle est supérieure à la valeur seuil V1 et inférieure ou égale à la valeur seuil V2 ; et
- est ignorée comme précisé ci-dessous, si elle est positionnée dans la zone Z3, c'est-à-dire si elle est supérieure la valeur seuil V2.

Dans ce dernier, si la valeur considérée est supérieure à la valeur seuil V2, la sous-étape de calcul E2B, la sous-étape de comparaison E2C et l'étape d'alerte E3 ne sont pas mises en œuvre pour cette valeur. Aucun indicateur de santé n'est donc calculé et aucune alerte n'est donc émise. Cette situation correspond à une situation dans laquelle un groupe auxiliaire de puissance de type APU (pour « Auxiliary Power Unit » en anglais) de l'aéronef est en fonctionnement de sorte que le collecteur 4 est presque complètement rempli.

Ensuite, à la sous-étape de calcul E2A qui suit la sous-étape de classement E21, l'unité de traitement 8 calcule la valeur de l'indicateur de santé HI en fonction de la dernière valeur reçue et en fonction du fait qu'elle soit considérée comme normale ou anormale.

Plus précisément, le calcul est réalisé de la manière suivante par l'unité de traitement 8 :

- si la valeur reçue est normale, la valeur de l'indicateur de santé HI est égale à zéro ; et
- si la valeur reçue est anormale, la valeur de l'indicateur de santé HI est calculée à l'aide de l'expression suivante :

$$HI = 100 \left( N1 / (N1+N2) \right)$$

dans laquelle :
- N1 est le nombre de valeurs anormales dans la fenêtre glissante 18 (figure 5) ; et
- N2 est le nombre de valeurs normales dans la fenêtre glissante 18.

La fenêtre glissante 18 comprend un nombre prédéterminé de valeurs, à savoir N1+N2 valeurs, c'est-à-dire la dernière valeur considérée (par exemple la valeur Vj1 pour l'exemple de la figure 5) ainsi que les (N1+N2-1) valeurs (normales et/ou anormales) précédant directement cette dernière valeur. Le nombre prédéterminé de valeurs peut être choisi en fonction de l'aéronef ou du système d'alimentation, auquel est appliqué le procédé P. A titre de simple d'illustration non limitative, il peut être égal à 60. On peut également définir un nombre minimal de valeurs pour la fenêtre glissante 18, par exemple 5, à partir duquel l'indicateur de santé peut être calculé à la sous-étape de calcul E2B même si ledit nombre prédéterminé n'est pas atteint. Un exemple de fenêtre glissante 18 avec une flèche F indiquant son sens de déplacement, est représenté sur la figure 5.

Ensuite, à la sous-étape de comparaison E2C, l'unité de traitement 8 compare la valeur de l'indicateur de santé HI (calculée à la sous-étape de calcul E2B) à un seuil S de manière à pouvoir détecter une situation de déconnexion.

Plus précisément, si la valeur de l'indicateur de santé HI est inférieure ou égale au seuil S (figure 6), la situation est considérée comme normale, c'est-à-dire sans déconnexion du conduit 2 (figure 3).

En revanche, si la valeur de l'indicateur de santé HI est supérieure au seuil S, la situation est considérée comme une situation (anormale) de déconnexion correspondant à une déconnexion du conduit 2 de la pompe à injection 6 (figure 3).

Dans le cadre de la présente invention, la valeur du seuil S peut être adaptée à l'application envisagée et notamment à l'aéronef ou au système d'alimentation auquel est appliqué le procédé P. La valeur du seuil S, utilisée à la sous-étape de comparaison E2C, est de préférence comprise entre 50 et 70, et est par exemple égale à 60.

La figure 6 est un graphique illustrant un exemple de valeurs successives calculées d'un indicateur de santé. Dans cet exemple, les valeurs de l'indicateur de santé HI sont supérieures au seuil S pour plusieurs points. Une opération de maintenance réussie (une reconnexion du conduit 2) a été réalisée, comme l'illustrent les valeurs nulles de l'indicateur de santé HI (représentatives d'une situation normale) à partir de la valeur HI1.

En fonction du résultat de la sous-étape de comparaison E2C (situation normale ou situation de déconnexion), une alerte est émise ou non à l'étape d'alerte E3.

Si une situation de déconnexion est détectée, l'émetteur 12 émet une alerte visuelle (et/ou éventuellement sonore), en particulier pour avertir le personnel de maintenance. Cette alerte peut être accompagnée de l'affichage de la valeur calculée de l'indicateur de santé HI.

Si aucune situation de déconnexion n'est détectée, l'émetteur 12 n'émet aucune alerte. Dans un mode de réalisation particulier, elle peut toutefois informer les opérateurs de la situation effective.

Le procédé P comprend également une opération d'inhibition d'alerte permettant à un opérateur d'inhiber l'émetteur 12 pendant une durée donnée, par exemple pendant quelques jours, pour empêcher qu'une alerte soit émise à l'étape d'alerte E3 en cas de détection d'une situation de déconnexion.

Une telle inhibition évite qu'une alerte soit émise à chaque traitement d'une nouvelle valeur reçue, en attendant la réparation, alors que le personnel de maintenance a bien été alerté d'une situation de déconnexion, mais que la réparation n'a pas encore été réalisée.

Le dispositif 1 et le procédé P, tels que décrits ci-dessus, permettent ainsi, en tenant compte de la quantité V de carburant disponible dans le collecteur 4, de détecter, de façon complètement fiable, une situation de déconnexion du conduit 2 et d'émettre une alerte correspondante.

Ceci permet au personnel de maintenance ou à d'autres personnes s'occupant de l'aéronef d'être alertés et informés dès l'apparition et la détection d'une telle déconnexion. Ils peuvent ainsi prendre les mesures appropriées pour éviter l'apparition ou l'aggravation de dommages au niveau du collecteur, et également au niveau d'une nervure ou d'une lisse de la structure de l'aile se trouvant à proximité du collecteur.

**Revendications**

1. Procédé de détection d'une situation de déconnexion d'un conduit faisant partie d'un système de pompage d'un collecteur de carburant d'un aéronef, **caractérisé en ce qu'**il comporte la suite (SE) d'étapes successives suivante, qui est mise en œuvre de façon itérative :

   - une étape de réception (E1), mise en œuvre par un récepteur (8), pour recevoir une valeur de la quantité de carburant présente dans ledit collecteur (4) ;
   - une étape de traitement (E2), mise en œuvre par une unité de traitement (9) d'un calculateur (10), ladite étape de traitement (E2) comprenant :

      • une sous-étape de classification (E2A) pour classifier la valeur reçue à l'étape de réception (E1), le cas échéant en une valeur dite normale ou en une valeur dite anormale ;
      • une sous-étape de calcul (E2B) pour calculer la valeur d'un indicateur de santé (HI), à partir de ladite valeur reçue, normale ou anormale, ainsi que d'un nombre prédéterminé de valeurs reçues aux itérations précédentes formant une fenêtre glissante (18) ; et
      • une sous-étape de comparaison (E2C)

pour comparer la valeur de l'indicateur de santé (HI), calculée à la sous-étape de calcul (E2B), à un seuil (S) de manière à pouvoir détecter une situation de déconnexion ; et

- une étape d'alerte (E3), mise en œuvre par un émetteur (12), pour émettre une alerte au moins en cas de détection d'une situation de déconnexion.

2. Procédé selon la revendication 1, **caractérisé en ce qu'**à la sous-étape de calcul (E2B), la valeur de l'indicateur de santé :

- est égale à zéro, si la valeur reçue est normale ;
- est calculée à l'aide de l'expression suivante, si la valeur reçue est anormale :

$$HI = 100 \, (N1/ \, (N1+N2))$$

dans laquelle :

• N1 est le nombre de valeurs anormales dans la fenêtre glissante (18) ; et
• N2 est le nombre de valeurs normales dans la fenêtre glissante (18).

3. Procédé selon l'une des revendications 1 et 2, **caractérisé en ce qu'**à la sous-étape de classification (E2A), une valeur reçue est considérée :

- comme une valeur anormale, si elle est inférieure ou égale à une première valeur seuil (V1) prédéterminée ; et
- comme une valeur normale, si elle est supérieure à ladite première valeur seuil (V1) prédéterminée et inférieure ou égale à une seconde valeur seuil (V2) prédéterminée, la seconde valeur seuil (V2) prédéterminée étant supérieure à la première valeur seuil (V1) prédéterminée.

4. Procédé selon la revendication 3, **caractérisé en ce que** si, à la sous-étape de classification (E2A), la valeur reçue est supérieure à la seconde valeur seuil (V2) prédéterminée, la sous-étape de calcul (E2B), la sous-étape de comparaison (E2C) et l'étape d'alerte (E3) ne sont pas mises en œuvre pour cette valeur reçue.

5. Procédé selon l'une quelconque des revendications précédentes, **caractérisé en ce que** ladite suite d'étapes (SE) successives est mise en œuvre après chaque vol de l'aéronef.

6. Procédé selon l'une quelconque des revendications précédentes, **caractérisé en ce qu'**à l'étape d'alerte (E3), la valeur de l'indicateur de santé (HI) calculée à la sous-étape de calcul (E2B), est affichée sur un écran (14).

7. Procédé selon l'une quelconque des revendications précédentes, **caractérisé en ce qu'**il comprend une opération d'inhibition d'alerte permettant d'inhiber l'étape d'alerte (E3) pendant une durée donnée, pour qu'aucune alerte ne soit émise à l'étape d'alerte (E3) pendant cette durée donnée.

8. Procédé selon l'une quelconque des revendications précédentes, **caractérisé en ce qu'**il comporte une étape préliminaire (E0) de mesure de la valeur de la quantité de carburant dans ledit collecteur (4), cette valeur mesurée pouvant être utilisée comme valeur à prendre en compte à l'étape de réception (E1).

9. Dispositif de détection d'une situation de déconnexion d'un conduit d'un système de pompage faisant partie d'un collecteur de carburant d'un aéronef, **caractérisé en ce qu'**il comporte au moins :

- un récepteur (8) configuré pour recevoir une valeur de la quantité de carburant présente dans ledit collecteur (4) ;
- une unité de traitement (9) d'un calculateur (10) configurée pour :

• classifier la valeur reçue, en une valeur dite normale ou en une valeur dite anormale ;
• calculer la valeur d'un indicateur de santé (HI), à partir de ladite valeur reçue, normale ou anormale, ainsi que d'un nombre prédéterminé de valeurs reçues précédemment, formant une fenêtre glissante (18) ; et
• comparer la valeur de l'indicateur de santé (HI) ainsi calculée à un seuil (S) de manière à pouvoir détecter une situation de déconnexion ; et

- un émetteur (12) configuré pour émettre une alerte au moins en cas de détection d'une situation de déconnexion.

Fig. 1

Fig. 2

Fig. 3

Fig. 4

Fig. 5

Fig. 6

Europäisches
Patentamt

European
Patent Office

Office européen
des brevets

# RAPPORT DE RECHERCHE EUROPEENNE

Numéro de la demande

EP 25 16 9617

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Easa: "Notice of proposed amendment (NPA) No 2011-13", , 17 octobre 2003 (2003-10-17), pages 1-38, XP093199611, Extrait de l'Internet: URL:https://www.easa.europa.eu/en/document -library/notices-of-proposed-amendment/npa -2011-13 [extrait le 2024-08-28] * page 37 - page 38 * ----- | 1-9 | INV. B64D37/00 B64D37/32 F02C7/22 ADD. B64D45/00 |
| A | FR 3 128 993 A1 (SAFRAN AEROSYSTEMS [FR]) 12 mai 2023 (2023-05-12) * alinéa [0013] - alinéa [0050]; figures 1, 2 * ----- | 1-9 | |
| A | ES 2 312 096 T3 (BOEING CO) 16 février 2009 (2009-02-16) * page 1 - page 8; figures 1, 2 * ----- | 1-9 | |

**DOMAINES TECHNIQUES RECHERCHES (IPC)**

B64D
G01M

Le présent rapport a été établi pour toutes les revendications

| Lieu de la recherche | Date d'achèvement de la recherche | Examinateur |
|---|---|---|
| Munich | 28 juillet 2025 | Morasch, Alexander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 16 9617

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-07-2025

| Document brevet cité au rapport de recherche | | Date de publication | Membre(s) de la famille de brevet(s) | | Date de publication |
|---|---|---|---|---|---|
| FR 3128993 | A1 | 12-05-2023 | FR | 3128993 A1 | 12-05-2023 |
| | | | WO | 2023079217 A1 | 11-05-2023 |
| ------- | | --------- | ----------------------------------------- | | --------- |
| ES 2312096 | T3 | 16-02-2009 | AT | E405489 T1 | 15-09-2008 |
| | | | EP | 1731422 A1 | 13-12-2006 |
| | | | ES | 2312096 T3 | 16-02-2009 |
| | | | US | 2006278761 A1 | 14-12-2006 |
| | | | US | 2009032645 A1 | 05-02-2009 |
| ------- | | --------- | ----------------------------------------- | | --------- |

EPO FORM P0460

Pour tout renseignement concernant cette annexe : voir Journal Officiel de l'Office européen des brevets, No.12/82